# EUROPEAN PATENT APPLICATION

(11) **EP 4 838 305 A1**
(43) Date of publication of application: **11.11.2026**
(21) Application number: 26173381.0
(22) Date of filing: 20.04.2026
(51) Int. Cl.: G03G 15/00, B41J 29/393

(54) **IMAGE FORMING APPARATUS, CONTROL METHOD, AND PROGRAM**

(30) Priority: 08.05.2025 JP 2025078048
(71) Applicant: Konica Minolta, Inc., Tokyo 100-7015 (JP)
(72) Inventor: HIROTA, Soh, Tokyo, 100-7015 (JP); NAIKI, Shigeki, Tokyo, 100-7015 (JP)
(74) Representative: MFG Patentanwälte Meyer-Wildhagen Meggle-Freund Gerhard PartG mbB

(57) **Abstract**

Provided is an image forming apparatus that includes: an acquisition section that acquires a printing condition when an image defect has occurred; and an image former that forms a test chart on a sheet under the acquired printing condition, and the image forming apparatus transmits image data obtained by reading the test chart formed on the sheet to another apparatus in a case where a predetermined condition is satisfied.

## Description

### CROSS REFERENCE TO RELATED APPLICATIONS

### BACKGROUND

### 1. Technological Field

The present invention relates to an image forming apparatus, a control method, and a program.

### 2. Description of the Related Art

An image defect occurring during printing is a problem that the user seeks to resolve promptly. When an image defect occurs, the user first contacts the support center by telephone or the like. The support center estimates the cause. Thereafter, a service engineer visits the user to adjust the image forming apparatus and/or replace parts, as needed.

When contacting the support center, the user needs to describe the image defect, and such a description is burdensome to the user. In addition, it may be difficult for the support center to estimate the cause of the image defect based only on the user's description. Accordingly, there is a case where the service engineer visits the user without sufficient preparation for support and is required to visit the user again because the service engineer cannot provide sufficient support. Alternatively, there is also a case where a service engineer visits the user after preparing an excessive number of replacement parts, although simple machine adjustment by the user would have been sufficient without using the prepared replacement parts.

In view of such circumstances, an image diagnostic system has been provided as a system that allows the user to inform the support center of the content of an image defect by an operation of the user operation and enables a prompt support response (for example, Japanese Patent Publication Laid-Open No. 2015-118285). This image diagnostic system has a function of printing a test chart in response to a user's instruction and transmitting scanned data of the printed test chart to the support center.

### SUMMARY

Preferably, a test chart is printed under printing conditions identical to those when an image defect has occurred, but the printing conditions may have been changed by the time the test chart is printed due to the use by many users after the image defect had occurred. In many cases, there are numerous cases where the use of the above-described function is confined to users having administrator privileges. Accordingly, a time lag may occur between when the user without administrator privileges recognizes an image defect and when a user with administrator privileges uses the above-described function.

In such a case, the printing conditions when a test chart is printed differ from the printing conditions when an image defect has occurred, and thus, the image defect may not be reproduced on the printed test chart.

An object of the present invention is to provide an image forming apparatus, a control method, and a program, each of which is capable of reproducing an image defect on a test chart.

In order to realize at least one of the above-described objects, an image forming apparatus reflecting an aspect of the present invention comprises: an acquisition section that acquires a printing condition when an image defect has occurred; and an image former that forms a test chart on a sheet under the acquired printing condition.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a diagram illustrating an example of the configuration of an image diagnostic system;
Fig. 2 is a diagram schematically illustrating an example of the overall configuration of an image forming apparatus according to the present embodiment;
Fig. 3A is a block diagram illustrating an example of a main part of a control system of the image forming apparatus;
Fig. 3B is a block diagram illustrating the configuration of a control section;
Fig. 4A is a diagram illustrating an example of a printing condition database;
Fig. 4B is a diagram illustrating an example of a state database;
Fig. 5 is a diagram illustrating an example of a designation screen;
Fig. 6 is a flowchart illustrating a flow of processing of the image forming apparatus;
Fig. 7 is a flowchart illustrating a flow of processing of the image forming apparatus; and
Fig. 8 is a flowchart illustrating a flow of processing of an image diagnostic apparatus.

### Detailed Description of Embodiments

Hereinafter, one or more embodiments of the present invention will be described with reference to the drawings. However, the scope of the invention is not limited to the disclosed embodiments.

### [Image Diagnostic System]

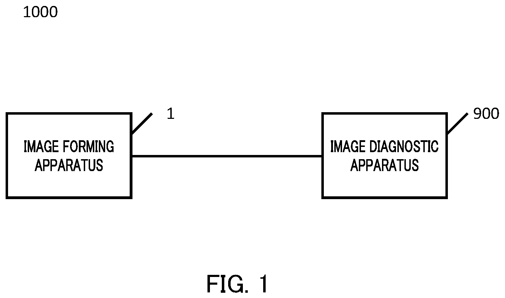

Fig. 1 is a diagram illustrating an example of the configuration of an image diagnostic system 1000. As illustrated in Fig. 1, the image diagnostic system 1000 includes an image forming apparatus 1 and an image diagnostic apparatus 900. The image forming apparatus 1 forms a test chart on a sheet of paper (hereinafter referred to as "sheet"), and transmits, via a communication line, image data obtained by reading the test chart (hereinafter also expressed as "diagnostic target image data") to the image diagnostic apparatus 900.

The image diagnostic apparatus 900 may be constituted by, for example, a server or the like provided in a support center for the image forming apparatus 1. The image diagnostic apparatus 900 performs various diagnoses on the diagnostic target image data and determines a support policy. Note that, although only one image forming apparatus 1 is illustrated in Fig. 1 for simplifying the description, the image diagnostic apparatus 900 is capable of communicating with a plurality of image forming apparatuses 1. Then, the image diagnostic apparatus 900 can perform diagnosis on the diagnostic target image data transmitted from the image forming apparatuses 1.

Examples of diagnostic items for diagnosis include development memory, graininess, maximum density, in-plane color difference, gradation (output sheet density), line width, color misregistration, pattern edge, leading-end blur, rear-end edge, lead-off, fogging, and backside stain. In addition, examples of other diagnostic items include FD (conveyance direction) streaks, oblique streaks, automatic adjustment of density balance, spot color/white fireflies, backside stain, and black/white specks.

Examples of such factors that degrade quality include the following factors:
- Stain of a charging section, an exposure section, a sheet feed path, and a roller provided in an image former;
- Misalignment and wear of specific parts;
- Static electricity accumulated on parts and paper;
- Calibration failure; and
- Increase in temperature of parts.

Examples of support policies for eliminating the above factors include the following pieces of processing:
- Automatic cleaning of stain on the relevant portion;
- Position adjustment of parts;
- Electrostatic cleaning;
- Automatic calibration adjustment;
- Cooling of parts; and
- Replacement of parts.

The above-described factors and support policies are merely examples and the present invention is not limited thereto.

### [Image Forming Apparatus]

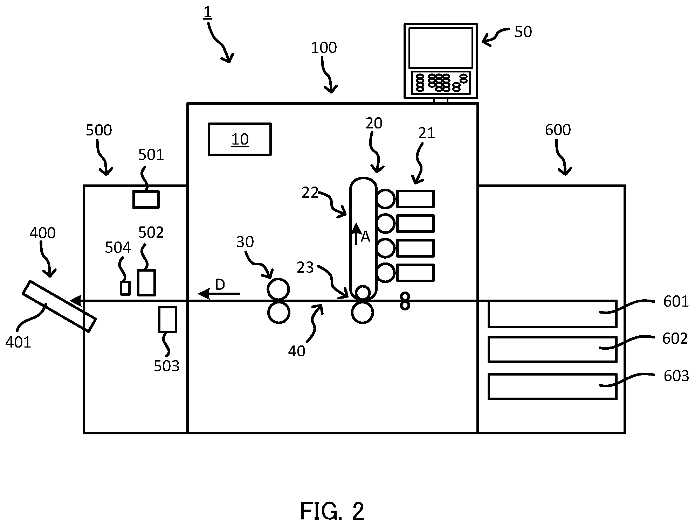

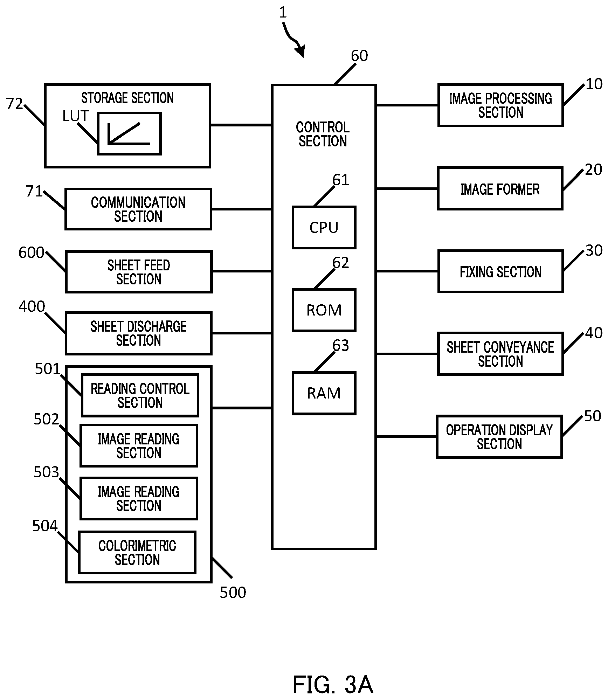

Fig. 2 is a diagram schematically illustrating an example of the overall configuration of the image forming apparatus 1 according to the present embodiment. In addition, Fig. 3A is a block diagram illustrating an example of a main part of a control system of the image forming apparatus 1.

The image forming apparatus 1 is an apparatus that forms an image on a sheet such as a flat cut sheet. Note that, in the present embodiment, a sheet is used as an example of a sheet of paper, but the sheet is not limited to paper. As illustrated in Fig. 2, the image forming apparatus 1 includes an image forming apparatus main body 100, a reading apparatus 500, a sheet feed section 600, a sheet discharge section 400, and the like.

The image forming apparatus main body 100 is, for example, a color image forming apparatus of an intermediate transfer method that utilizes an electrophotographic process technique. The image forming apparatus main body 100 performs printing by primarily transferring, onto an intermediate transfer member, toner images of the respective CMYK colors formed on photoreceptors, superposing the toner images of the four colors on the intermediate transfer member, and then secondarily transferring the toner images onto a sheet. Note that, CMYK refers to cyan (C), magenta (M), yellow (Y), and black (K).

The image forming apparatus main body 100 employs, for example, a tandem system in which photoreceptors corresponding to the four CMYK colors are arranged in series along the travel direction of the intermediate transfer member, and toner images of the respective colors are sequentially transferred onto the intermediate transfer member in a single pass.

In addition, as illustrated in Fig. 3A, the image forming apparatus 1 includes an image processing section 10, an image former 20, a fixing section 30, a sheet conveyance section 40, an operation display section 50, a control section 60, a communication section 71, a storage section 72, the sheet feed section 600, the sheet discharge section 400, the reading apparatus 500, and the like.

The control section 60 includes a central processing unit (CPU) 61, a read only memory (ROM) 62, a random access memory (RAM) 63, and the like. The CPU 61 reads a program corresponding to the processing content from the ROM 62, loads the program into the RAM 63, and centrally controls the operations of the respective blocks of the image forming apparatus 1 in cooperation with the loaded program. At this time, various data such as a look up table (LUT) accommodated in the storage section 72 are referred to.

As the storage section 72, for example, a hard disk drive (HDD) or a solid-state drive (SSD) is used, and a dynamic random access memory (DRAM) or the like may also be used in combination.

The control section 60 transmits and receives, via the communication section 71, various data to and from an external apparatus (for example, the image diagnostic apparatus 900 or a personal computer) that is connected to a communication network such as a local area network (LAN) or a wide area network (WAN). For example, the control section 60 receives image data transmitted from an external apparatus, and performs printing on a sheet based on the image data (input image data). The communication section 71 is constituted by, for example, a communication control card such as a LAN card.

The control section 60 is connected to the image processing section 10, the image former 20, the fixing section 30, the sheet conveyance section 40, the operation display section 50, an acquisition section 510, the communication section 71, the storage section 72, the sheet feed section 600, the sheet discharge section 400, the reading apparatus 500, and the like, respectively. These sections execute predetermined processing based on instructions from the control section 60.

The image processing section 10 includes a circuit that performs image processing on input image data according to an initial setting or a user setting. The image former 20 is controlled based on the image data that has been subjected to the image processing.

The image former 20 includes an image forming unit 21, an intermediate transfer unit 22, a secondary transfer unit 23, and the like. Based on the image data from the image processing section 10, the image forming unit 21 performs printing using color toner of each color component. That is, the image former 20 forms, on a sheet, a color image including a test chart and the like, which is composed of colors generated using the CMYK as a plurality of standard colors.

The image forming unit 21 includes, for each color, an exposure apparatus, a developing apparatus, a photosensitive drum, a charging apparatus, a drum cleaning apparatus, and the like. Since techniques known in the art may be employed for the exposure apparatus, the developing apparatus, the photosensitive drum, the charging apparatus, and the drum cleaning apparatus, detailed descriptions thereof will be omitted herein.

The intermediate transfer unit 22 includes an intermediate transfer belt and the like. The intermediate transfer belt is stretched in a loop shape over a plurality of support rollers and travels in the direction of an arrow A. The support rollers include a backup roller, a primary transfer roller, and a drive roller, but illustration of these rollers is omitted herein. The intermediate transfer belt is in pressure contact with the photosensitive drum, thereby transferring a toner image from the photosensitive drum onto the intermediate transfer belt.

Note that, the intermediate transfer unit 22 may also be configured to include a belt cleaning apparatus including a plate-shaped belt cleaning blade or the like that is in sliding contact with a surface of the intermediate transfer belt. The belt cleaning apparatus removes transfer residual toner and the like remaining on the surface of the intermediate transfer belt after the secondary transfer.

The secondary transfer unit 23 includes a secondary transfer roller and the like. The secondary transfer roller is in pressure contact with the intermediate transfer belt. Thus, a secondary transfer nip is formed between the intermediate transfer belt and the secondary transfer roller.

In the secondary transfer unit 23, when a sheet is conveyed to the secondary transfer nip, toner images of the respective colors carried on the intermediate transfer belt are collectively transferred onto the sheet. The sheet onto which the toner images have been transferred is conveyed toward the fixing section 30 by the secondary transfer roller.

Note that, the secondary transfer unit 23 may be a belt-type secondary transfer unit including a secondary transfer belt stretched over a plurality of support rollers, or the like, instead of a roller-type secondary transfer unit including a secondary transfer roller or the like.

The fixing section 30 includes a fixing roller, a pressure roller, and the like. The fixing roller is heated to a predetermined fixing temperature, and the pressure roller forms a fixing nip at which a sheet is held between the fixing roller and the pressure roller and is conveyed. In the fixing section 30, a sheet conveyed after secondary transfer of a toner image is heated and pressurized at the fixing nip, thereby fixing the toner image to the sheet.

The sheet conveyance section 40 includes, for example, a conveyance path for conveying a sheet, a plurality of conveyance rollers, and drive motors for rotationally driving the conveyance rollers.

The sheet conveyance section 40 conveys a sheet, which has been supplied from the sheet feed section 600, to the secondary transfer unit 23 and the fixing section 30, and then conveys the sheet to the sheet discharge section 400.

The operation display section 50 is constituted by, for example, a liquid crystal display (LCD) with a touch screen, and functions as both a display section and an operation section. The display section displays various operation screens, image status information, operation statuses of respective functions, and the like, according to a display control signal input from the control section 60. The operation section includes various operation keys such as a numeric keypad and a start key, receives various input operations from the user, and outputs an operation signal to the control section 60.

The sheet feed section 600 is disposed on the upstream side of the image forming apparatus main body 100 in the sheet conveyance direction D, and is connected to the image forming apparatus main body 100. The sheet feed section 600 includes a plurality of sheet feeding trays 601 to 603, and sheets identified based on basis weight, size, and the like are stored in the respective sheet feeding trays 601 to 603 for each type set in advance. Based on an instruction from the image forming apparatus main body 100, the sheet feed section 600 supplies the designated sheet to the side of the image forming apparatus main body 100.

The reading apparatus 500 includes a reading control section 501, image reading sections 502 and 503, and a colorimetric section 504. The reading control section 501 includes a CPU, a ROM, a RAM, and the like (which are not illustrated) and controls the reading apparatus 500 in its entirety. Each of the image reading sections 502 and 503 can be constituted by a CCD sensor, a CMOS sensor, or the like, and is capable of reading an image of a sheet conveyed along the conveyance path over an entire direction intersecting the conveyance direction. Reading results obtained by the image reading sections 502 and 503 and the colorimetric section 504 are transmitted to the reading control section 501. The reading control section 501 outputs, to the control section 60, diagnostic target image data obtained from a reading result, and the control section 60 transmits the diagnostic target image data to the image diagnostic apparatus 900 via the communication section 71.

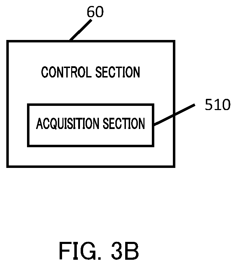

Fig. 3B is a block diagram illustrating details of the control section 60. As illustrated in Fig. 3B, the control section 60 includes an acquisition section 110. The acquisition section 510 acquires printing conditions when an image defect has occurred. In addition, the acquisition section 510 acquires the state of the image forming apparatus 1. The printing conditions and the state are stored in the storage section 72.

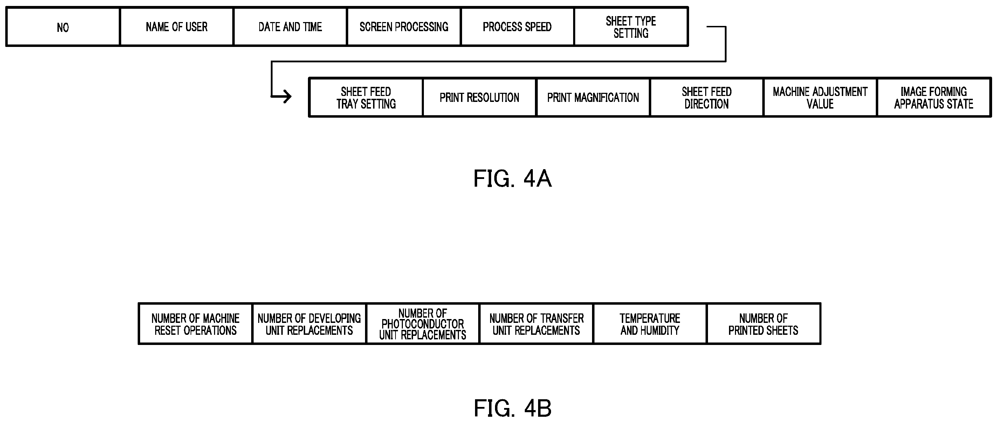

Next, the printing conditions and the state of the image forming apparatus 1 will be described. Fig. 4A is a diagram illustrating an example of a printing condition database indicating printing conditions. Fig. 4B is a diagram illustrating an example of a state database illustrating the state of the image forming apparatus 1. These databases are stored in the storage section 72.

As illustrated in Fig. 4A, the printing condition database includes "NO", "name of user", "date and time", "screen processing", "process speed", "sheet type setting", "sheet feed tray setting", "print resolution", "print magnification", "sheet feed direction", "machine adjustment value", and "image forming apparatus state". Inter alia, the "screen processing", "process speed", "sheet type setting", "sheet feed tray setting", "print resolution", "print magnification", "sheet feed direction", and "machine adjustment value" indicate printing conditions.

The "screen processing" indicates, for example, an amplitude modulation (AM) screen method, a frequency modulation (FM) screen method, or the like. The "process speed" indicates a sheet conveyance speed during image formation. The "sheet type setting" indicates a setting for a type of sheet on which printing is performed. The "sheet feed tray setting" indicates a tray from which a sheet is fed during printing. The "print resolution" indicates a resolution for printing. The "print magnification" indicates a magnification when printing is performed with the size (scale) of data to be printed being enlarged or reduced. The "sheet feed direction" indicates whether a sheet is conveyed in the horizontal direction or in the vertical direction. The "machine adjustment value" indicates various correction values, calibration parameters, and the like that are set during manufacturing, maintenance, or adjustment to optimize the operation and printing accuracy of the image forming apparatus 1.

In addition, the "NO" indicates an identification number for identifying printing conditions. The "name of user" indicates the name of the user who caused the image forming apparatus 1 to execute printing under the printing conditions. The "date and time" indicates the date and time at which printing was executed under the printing conditions. The "image forming apparatus state" indicates the state of the image forming apparatus illustrated in Fig. 4B. Each time a print job is executed, a record as illustrated in Fig. 4A is added to the printing condition database. Note that, the current printing conditions are stored in the RAM 63, and the control section 60 can obtain the current printing conditions.

As illustrated in Fig. 4B, the state database includes "number of machine reset operations", "number of developing unit replacements", "number of photoconductor unit replacements", "number of transfer unit replacements", "temperature and humidity", and "number of printed sheets". Each of the information included in the state database is information at the time of the execution of printing. The "number of machine reset operations" indicates the number of times the image forming apparatus 1 has been reset. The "number of developing unit replacements" indicates the number of times the developing unit has been replaced. The "number of photoconductor unit replacements" indicates the number of times the photoconductor unit has been replaced. The "number of transfer unit replacements" indicates the number of times the transfer unit has been replaced. The "temperature and humidity" indicates the temperature and humidity detected by the image forming apparatus 1. The "number of printed sheets" indicates the number of sheets that have been printed. Note that, the current state is stored in the RAM 63, and the control section 60 can obtain the current state.

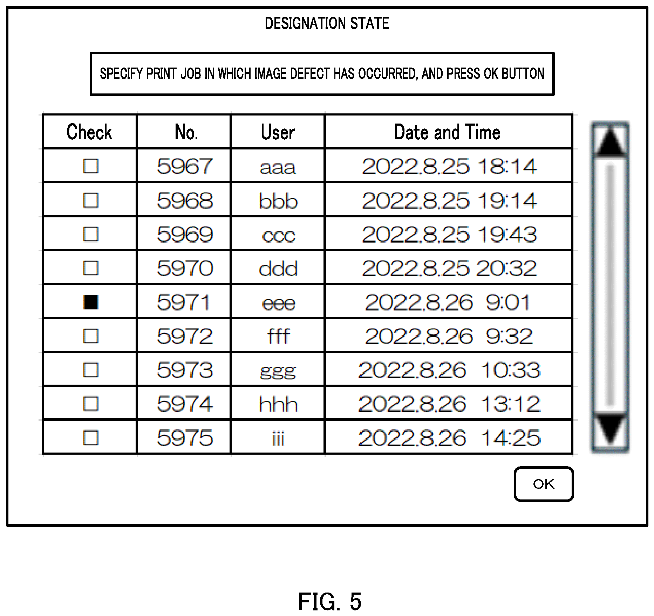

Fig. 5 is a diagram illustrating an example of a designation screen for allowing the user to designate printing conditions. The image forming apparatus 1 displays the designation screen illustrated in Fig. 5 on the operation display section 50. The designation screen displays a list of printing executed in the past. The list is scrollable. In the list of printing, "No", "User", and "Date and Time" are displayed to allow the user to identify a print job in which an image defect has occurred. Inter alia, the "No" indicates an identification number used to identify the printing conditions described in Fig. 4A. The "User" indicates the name of the user who caused the image forming apparatus 1 to execute printing. The "Date and Time" indicates the date and time at which printing was executed.

The user designates printing in which an image defect has occurred by touching "Check" corresponding to the printing in which an image defect has occurred in the list. In the example of Fig. 5, printing with the "No". 5971 is designated. The user designates printing in which an image defect has occurred, and presses the "OK" button. When the "OK" button is pressed, the image forming apparatus 1 determines that the start an image diagnosis mode has been instructed, reads printing conditions and the like corresponding to the designated printing from the storage section 72, and prints a test chart. As described above, the image forming apparatus 1 acquires the printing conditions based on the content designated on the designation screen that allows the user to designate the printing conditions.

The image forming apparatus 1 transmits diagnostic target image data to another apparatus, such as the image diagnostic apparatus 900, when a predetermined condition is satisfied. Note that, in the designation screen illustrated in Fig. 5, the print mode when an image defect has occurred, the sheet feed direction when the image defect has occurred, the print magnification when the image defect has occurred, and/or the print history when the image defect has occurred may be further displayed. Thus, the user can designate printing more reliably.

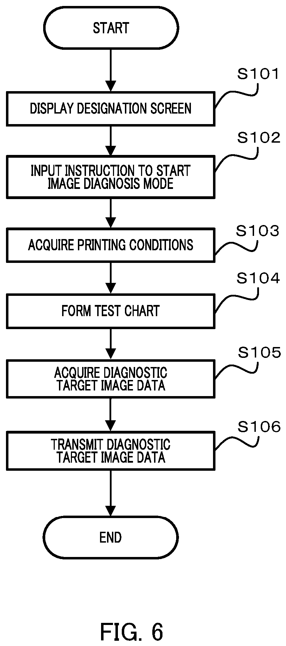

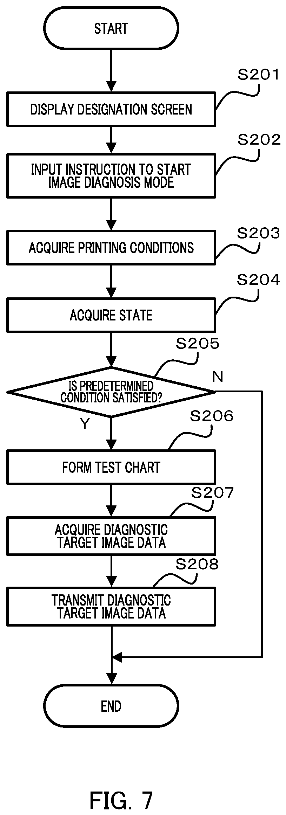

Next, a flow of processing of the image forming apparatus 1 will be described with reference to a flowchart. Figs. 6 and 7 are flowcharts illustrating flows of processing of the image forming apparatus 1. Fig. 6 illustrates processing in which a predetermined condition to be described later is not taken into account, and Fig. 7 illustrates processing in which the predetermined condition is taken into account.

In Fig. 6, the image forming apparatus 1 displays the above-described designation screen (step S101). The designation screen may be configured to be displayed, for example, in response to the user pressing a button provided in advance for displaying the designation screen. When the user designates printing, in which an image defect has occurred, on the designation screen and presses the "OK" button, the image forming apparatus 1 determines that an instruction to start an image diagnosis mode has been inputted (step S102).

The image forming apparatus 1 acquires, from the printing condition database stored in the storage section 72, printing conditions corresponding to the designated printing (step S103). The image forming apparatus 1 forms a test chart on a sheet under the acquired printing conditions (step S104). Note that, in a case where it is not possible to configure the printing conditions to be exactly identical to the acquired printing conditions, the image forming apparatus 1 forms a test chart on the sheet under printing conditions that are as close as possible to the acquired printing conditions.

The image forming apparatus 1 acquires diagnostic target image data obtained by reading the sheet on which the test chart has been formed (step S105), transmits the acquired diagnostic target image data to the image diagnostic apparatus 900 (step S106), and ends the processing. Note that, in step S106, the image forming apparatus 1 may transmit the diagnostic target image data together with the printing conditions. By also transmitting the printing conditions, the image forming apparatus 1 can contribute to analysis performed by the support center.

Next, the flowchart of Fig. 7 will be described. In Fig. 7, the image forming apparatus 1 displays the designation screen (step S201). The designation screen may be configured to be displayed, for example, in response to the user pressing a button provided in advance for displaying the designation screen. When the user designates printing, in which an image defect has occurred, on the designation screen and presses the "OK" button, the image forming apparatus 1 determines that an instruction to start an image diagnosis mode has been inputted (step S202).

The image forming apparatus 1 acquires, from the printing condition database stored in the storage section 72, printing conditions corresponding to the designated printing (step S203), and acquires the current state of the image forming apparatus 1 from the RAM 63 (step S204). The image forming apparatus 1 determines whether a predetermined condition is satisfied (step S205). The predetermined condition will be described later.

In a case where the predetermined condition is not satisfied (step S205: NO), the image forming apparatus 1 ends the processing. In a case where the predetermined condition is satisfied (step S205: YES), the image forming apparatus 1 forms a test chart on a sheet under the acquired printing conditions (step S206).

The image forming apparatus 1 acquires diagnostic target image data obtained by reading the sheet on which the test chart has been formed (step S207), transmits the acquired diagnostic target image data to the image diagnostic apparatus 900 (step S208), and ends the processing. Note that, in step S208, the image forming apparatus 1 may transmit the diagnostic target image data together with the printing conditions. By also transmitting the printing conditions, the image forming apparatus 1 can contribute to analysis by the support center.

The predetermined conditions described above will be described. The predetermined condition is that "a test chart is formable on a sheet under printing conditions identical to the acquired printing conditions" or that "the state of the image forming apparatus 1 satisfies a predetermined criterion".

Inter alia, the condition: "a test chart is formable on a sheet under printing conditions identical to the acquired printing conditions" is a condition requiring printing to be performed under printing conditions exactly identical to the printing conditions when an image defect has occurred.

In addition, the condition: "the state of the image forming apparatus 1 satisfies a predetermined criterion" is a condition requiring a criterion provided for each item constituting the state described in Fig. 4B to be satisfied. In the determination of the condition, when the printing conditions are acquired in step S203 described above, the image forming apparatus 1 acquires a state database included in the printing condition database. That is, the image forming apparatus 1 acquires a state when an image defect has occurred (referred to as the "state A"). Then, in step S204, the image forming apparatus 1 acquires the current state of the image forming apparatus 1 (referred to as the "state B").

The image forming apparatus 1 compares the state A with the state B. Specifically, in a case where the value of the state A and the value of the state B differ from each other with respect to the "number of machine reset operations", the "number of developing unit replacements", the "number of photoconductor unit replacements", and/or the "number of transfer unit replacements" among the items constituting the state, the image forming apparatus 1 determines that the criterion is not satisfied. This is because these items represent relatively large changes in state, and, in a case where such a change in state occurs, it can no longer be said that a test chart is formable in the state in which the image defect has occurred.

Regarding the "temperature and humidity", the image forming apparatus 1 determines that the criterion is satisfied in a case where a temperature t in the state B is within T ± 10°C and a humidity h in the state B is within H ± 30%, where T is the temperature in the state A and H is the humidity in the state A. Regarding the "number of printed sheets", the image forming apparatus 1 determines that the criterion is satisfied in a case where the number of printed sheets n in the state B is equal to or less than N + 10000 sheets, where N is the number of printed sheets in the state A.

In this manner, by performing the determination based on a stricter criterion than that in the processing of Fig. 6, an image defect can be reproducibly generated on a test chart. On the other hand, even in a case where a test chart cannot be formed under exactly identical printing conditions, a test chart can be formed on a sheet under printing conditions that are as close as possible to the acquired printing conditions, as in the processing of Fig. 6. In this manner, a test chart can be formed under printing conditions that are closer to those when an image defect has occurred, the probability of reproducing the image defect on the test chart can be increased.

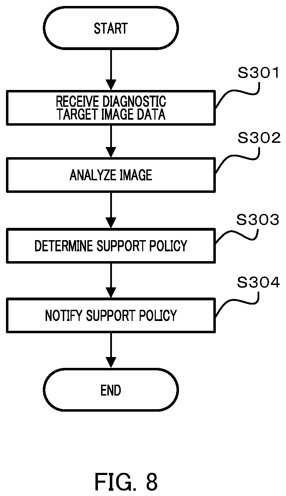

Fig. 8 is a diagram illustrating a flow of processing of the image diagnostic apparatus 900. Upon receiving diagnostic target image data from the image forming apparatus 1 (step S301), the image diagnostic apparatus 900 analyzes the image indicated by the diagnostic target image data (step S302). The image diagnostic apparatus 900 determines the support policy according to the analysis result (step S303), notifies the determined support policy (step S304), and ends the processing.

The analysis of an image and the determination of a support policy may be performed by a person in addition to being performed by the image diagnostic apparatus 900. In addition, the support policy may be notified by a person, for example, by telephone or the like. In accordance with the determined support policy, the support center may cause a service engineer to visit the user, or may cause the user to perform an operation via telephone, chat, or the like.

As described above, according to the present embodiment, a test chart is formed under printing conditions identical to those when an image defect has occurred, or under printing conditions close thereto, and thus, the image defect can be reproduced on the test chart.

Any of the above-described embodiment is merely an example for implementing the present invention, and the technical scope of the present invention should not be interpreted in a limited manner thereby. That is, the present invention can be implemented in various forms without departing from the spirit or main features thereof.

In addition, although a color image forming apparatus utilizing the electrophotographic process technique has been described as an example in the foregoing embodiment, the present invention is also applicable to a color image forming apparatus utilizing the inkjet technique.

In addition, any of the above-described embodiment is merely an example for implementing the present invention, and the technical scope of the present invention should not be interpreted in a limited manner thereby. That is, the present invention can be implemented in various forms without departing from the spirit or main features thereof.

Although embodiments of the present invention have been described and illustrated in detail, the disclosed embodiments are made for purposes of illustration and example only and not limitation. The scope of the present invention should be interpreted by terms of the appended claims.

### Reference Signs List

1 Image forming apparatus
20 Image former
500 Reading apparatus
501 Reading control section
502, 503 Image reading section
504 Colorimetric section
510 Acquisition section
900 Image diagnostic apparatus

## Claims

1. An image forming apparatus (1), comprising:
an acquisition section (510) that acquires a printing condition when an image defect has occurred; and
an image former (20) that forms a test chart on a sheet under the acquired printing condition.

2. The image forming apparatus (1) according to claim 1, wherein
the image forming apparatus (1) transmits image data obtained by reading the test chart formed on the sheet to another apparatus in a case where a predetermined condition is satisfied.

3. The image forming apparatus (1) according to claim 2, wherein
the image data is transmitted together with the printing condition.

4. The image forming apparatus (1) according to claim 2, wherein
the predetermined condition is that the test chart is formable on the sheet under a printing condition identical to the acquired printing condition, or that a state of the image forming apparatus satisfies a predetermined criterion.

5. The image forming apparatus (1) according to any one of claims 1 to 4, wherein
the printing condition is at least one of screen processing, process speed, sheet type setting, sheet feed tray setting, print resolution, print magnification, sheet feed direction, and/or machine adjustment value.

6. The image forming apparatus (1) according to claim 5, wherein
the state of the image forming apparatus is at least one of a number of machine reset operations, a number of developing unit replacements, a number of photoconductor unit replacements, a number of transfer unit replacements, temperature and humidity, and/or a number of printed sheets.

7. The image forming apparatus (1) according to claim 1, wherein
the acquisition section (510) acquires the printing condition based on a content designated on a designation screen that allows a user to designate the printing condition.

8. The image forming apparatus (1) according to claim 7, wherein
the designation screen includes at least one of a date and time when the image defect has occurred, a print mode when the image defect has occurred, a sheet feed direction when the image defect has occurred, a print magnification when the image defect has occurred, a print history when the image defect has occurred, and/or a name of a user who has caused printing to be performed when the image defect has occurred.

9. A control method of controlling an image forming apparatus (1), the control method comprising:
acquiring a printing condition when an image defect has occurred; and
forming a test chart on a sheet under the acquired printing condition.

10. A program, causing a computer of an image forming apparatus (1) to execute:
acquiring a printing condition when an image defect has occurred; and
forming a test chart on a sheet under the acquired printing condition.
